# EUROPÄISCHE PATENTSCHRIFT

(11) **EP 3 444 931 B1**
(45) Veröffentlichungstag und Bekanntmachung des Hinweises auf die Patenterteilung: **11.03.2020**
(21) Anmeldenummer: 17186429.1
(22) Anmeldetag: 16.08.2017
(51) Int. Cl.: H02K 15/08

(54) **WICKELMASCHINE**
COILING MACHINE
BOBINEUSE

(43) Veröffentlichungstag der Anmeldung: 20.02.2019
(73) Patentinhaber: SMZ Wickel- und Montagetechnik AG, 5436 Würenlos (CH)
(72) Erfinder: STRAUB, Mario, 8052 Zürich (CH); SCHNEEBELI, René, 8005 Zürich (CH)
(74) Vertreter: Piticco, Lorena

(56) Entgegenhaltungen:
- EP-A1- 0 108 040
- EP-A1- 0 256 997
- EP-A2- 1 049 237
- US-A- 4 142 289

## Beschreibung

### TECHNISCHES GEBIET

Die vorliegende Erfindung betrifft ein Wickelmodul und einen Modulrahmen und eine Wickelvorrichtung mit mindestens einem Wickelmodul zum Wickeln von Spulen für elektrische Maschinen.

### STAND DER TECHNIK

Wickelmodule und Wickelmaschinen sind bekannt. So ist es beispielsweise bekannt, dass man eine Wickelvorrichtung verwendet, welche mehrere Wickelstationen aufweist und dass man Wickelkörper simultan mit der Nadelwickeltechnik bewickelt.

Aus der EP 1 049 237 A2 ist eine Wickelmaschine mit einem Wickelmodul bekannt.

### DARSTELLUNG DER ERFINDUNG

Es ist eine Aufgabe der vorliegenden Erfindung, ein Wickelmodul anzugeben, welches ein verbessertes Wickelverfahren ermöglicht.

Diese Aufgabe wird durch das Wickelmodul nach Anspruch 1 gelöst. Demgemäss wird ein Wickelmodul für eine Wickelvorrichtung zum automatischen Wickeln von Wickelgut vorgeschlagen. Das Wickelgut ist insbesondere Draht, bspw. Kupferdraht, von typischen Durchmessern, insbesondere aber auch Durchmessern von 1 mm und mehr. Das Wickelgut wird hierbei auf einen Wickelkörper, insbesondere in Nuten des Wickelkörpers, zur Herstellung einer Spule für eine elektrische Maschine gewickelt.

Das Wickelmodul umfasst ein Modulgestell. Das Modulgestell bildet den Rahmen des Wickelmoduls, in welchem die Komponenten des Wickelmoduls untergebracht sind.

Weiter umfasst das Wickelmodul einen Nadelschlitten mit einer Wickelnadel. Der Nadelschlitten ist der Träger, welcher die Nadel trägt, wobei die Nadel vorzugsweise lösbar fest am oder im Nadelschlitten befestigt ist. Die Lösbarkeit ermöglicht die einfache Auswechslung der Nadel. Die Nadel wird auch als Wickeldüse bezeichnet. Aus deren Mündungsöffnung wird das Wickelgut Richtung Wickelkörper abgegeben. Der Nadelschlitten ist entlang einer ersten Richtung (Z-Hubrichtung) verfahrbar im Modulgestell gelagert. Die erste Richtung ist während des bestimmungsgemässen Wickelgebrauchs des Wickelmoduls vorzugsweise die Vertikale, verläuft also entlang der Gravitationsrichtung. Es ist jedoch auch möglich, dass die erste Richtung anders im Raum steht.

Die oben gestellte Aufgabe wird nun dadurch gelöst, dass das Wickelmodul weiter eine Wickelgutklemmeinrichtung zur Klemmung des Wickelgutes aufweist, welche ausgebildet ist, um das Wickelgut gegen Verdrehen um und gegen Verschieben entlang der Nadelachse (oder einer Längserstreckung des Wickelguts) zu sichern und diese Wickelgutklemmeinrichtung im oder am Nadelschlitten angeordnet ist.

Die Wickelgutklemmeinrichtung ist gezielt aktivierbar, sodass sie eine Verdrehsicherung bildet, welche verhindert, dass sich das Wickelgut bei aktivierter Verdrehsicherung um die eigene Achse dreht. Weiter agiert die Wickelgutklemmeinrichtung gleichzeitig als Verrutschsicherung, welche verhindert, dass sich das Wickelgut ungewollt entlang seiner Längsrichtung im Wickelgutkanal bewegt, wenn die Wickelgutklemmeinrichtung aktiviert ist. Somit ist eine optimale Kontrolle des Wickelguts während des Wickelprozesses gegeben. Typischerweise wird die Wickelgutklemmeinrichtung zwischen den Wickelphasen, in welchen das Wickelgut aus der Nadel ausgegeben wird, zeitenweise aktiviert. Während der Wickelphasen ist sie typsicherweise deaktiviert, um den Lauf des Wickelguts nicht zu stören.

Der vorliegenden Erfindung liegt die Erkenntnis zugrunde, dass die Wickelgutklemmeinrichtung direkt in den Nadelschlitten integriert sein kann, sich also während des Wickels mit dem Nadelträger mitbewegt. Dies lässt eine besonders leichte Bauweise zu, womit ein schneller Wickelläufer realisierbar ist. Insbesondere muss diese Klemmeinrichtung nicht mehr auf einer zusätzlichen externen Achse angebracht werden, womit Gewicht und Kosten eingespart sind.

Die vorliegende Erfindung erlaubt es insbesondere auch, eine Vielzahl von Rotoren und/oder Statoren mit mehreren Zähnen gleichzeitig zu bewickeln, wobei vorzugsweise der Reihe nach jeder Zahn bewickelt wird. Die vorliegende Erfindung ist auch vorteilhaft, wenn man Drahtdurchmesser von über 1 mm wickeln möchte.

In einem bevorzugten Ausführungsbeispiel weist die Wickelgutklemmeinrichtung einen am oder im Nadelschlitten gelagerten Klemmhebel auf. Der Klemmhebel ist zwischen einer Klemmposition und einer Freigabeposition bewegbar. Vorzugweise ist der Hebel an einem Hebellager befestigt und verschwenkbar. In der Klemmposition, also bei aktivierter Wickelgutklemmeinrichtung, ist der Klemmhebel so verschwenkt, dass er auf das sich im Wickelgutkanal befindliche Wickelgut greift und dieses bestimmungsgemäss festklemmt. In der Freigabeposition ist der Klemmhebel so verschwenkt, dass er das Wickelgut während des bestimmungsgemässen Gebrauchs freigibt, sodass dieses durch die Nadel auf den Wickelkörper abgebbar ist.

In einer bevorzugten Weiterbildung ist der Klemmhebel als ein zweiarmiger Hebel ausgebildet. Vorzugsweise stehen die beiden Hebelarme geneigt oder winklig zueinander und bilden insbesondere einen L-förmigen Hebel. Der L-förmige Hebel erlaubt eine kompakte Konstruktion mit verhältnismässig langen Hebelarmen, was optimal für die Kraftumleitung ist. Andere Hebelformen, wie bspw. eine gerader zweiarmiger Hebel oder ein einarmiger Hebel sind auch denkbar. Es können gar mehrere Klemmhebel vorgesehen sein.

In einer Weiterbildung ist der Klemmhebel über einen Hebelaktuator bewegbar.

Besonders bevorzugt ist der L-förmige Klemmhebel, wobei der Hebelaktuator an zwei Seiten vom L-förmigen Hebel umgeben ist. In anderen Worten: Vorzugsweise ist der Hebelaktuator zwischen den beiden Hebelarmen angeordnet. Dies erlaubt eine besonders kompakte Bauweise.

In einem bevorzugten Ausführungsbeispiel weist der Hebelaktuator ein bewegbar gelagertes Exzenterelement auf. Vorzugweise ist das Exzenterelement im oder am Nadelschlitten über eine Achse drehbar um die Achse gelagert. Der exzentrisch vorspringende Abschnitt kann dann drehpositionsabhängig auf einen Hebelarm des Hebels wirken. Ist der Hebelarm selbst an einer Achse gelagert, so kann durch der Hebelarm durch das Exzenterelement verschwenkt werden.

Die Rückbewegung zu dieser durch das Exzenterelement verursachten Klemmhebelbewegung kann bspw. durch ein Federelement, gegen welches das Exzenterelement vorzugsweise indirekt über den Hebel arbeitet, bewirkt werden. Der Klemmhebel und/oder das Exzenterelement können also vorgespannt sein, insbesondere in der Klemmposition, mittels einer Spannvorrichtung. Die Spannvorrichtung kann ein Federelement, insbesondere eine Druck- und/oder Zugfederelement, vorzugsweise eine Spiralfeder, aufweisen.

Vorzugsweise ist dieses Federelement einstellbar. Es kann bspw. eine Justierschraube vorgesehen sein, um die Spannung der Feder einzustellen. Dank der Einstellbarkeit ist es möglich, dass man die Wickelgutklemmvorrichtung passend auf das Wickelgut, bspw. auf den Wickelgutdurchmesser und/oder den Zug auf den Wickelgut einstellt. Dies insbesondere, wenn die vorgespannte Position die Klemmposition ist und die Betätigung des Hebelaktuators die Überführung in die Freigabeposition bewirkt. Andere Justiermechanismen sind natürlich auch einsetzbar.

Der Hebelaktuator kann vorzugsweise über eine Hydraulikeinrichtung, vorzugsweise einen pneumatischen Zylinder, zur Bewegung des Klemmhebels betätigbar sein. Andere Aktuatoren wie Servomotoren oder Magnetaktuatoren können auch eingesetzt werden, um die Bewegung des Hebels zwischen der Klemm- und der Freigabeposition zu bewirken.

Alternativerweise kann die Wickelgutklemmeinrichtung auch mit einem Zylinder oder einer Zange oder anderen Mitteln oder Klemmelementen den Klemmgriff bei Aktivierung der Wickelgutklemmeinrichtung vornehmen. Die Klemmelemente sind vorzugsweise bezüglich einer Bewegungsrichtung vorgespannt, sodass nur die andere Bewegungsrichtung aktiv bewirkt werden muss.

In einer Weiterbildung weist der Nadelschlitten einen vorzugsweise radial umlaufend geschlossenen Wickelgutkanal zur Führung des Wickelguts durch den Nadelschlitten zur Nadel auf. Vorzugsweise erstreckt sich dieser Wickelkanal zentrisch durch den Nadelschlitten. Zentrisch meint hier, dass der Wickelgutkanal symmetrisch bezüglich einer geführten Breite, also bspw. im Wesentlichen mittig zwischen allfälligen Führungsschienen für den Nadelschlitten und/oder im Wesentlichen mittig bezüglich einer geführten Höhe des Nadelschlittens in Richtung der Führungsschienen (Z-Richtung) verläuft.

Die geführte Höhe/Breite meint die Distanz zwischen den äusseren Auflagepunkten des Schlittens mit der Führung, der allfällige Überhang (also was sich hinter der Führung erstreckt) bleibt ausser Acht. Wenn der Schlitten also eine Platte ist, die entlang der Dicke geführt wird, so zählt ein Aufbau auf der Platte, der frei absteht und keinen direkten Kontakt mit der Führung hat, nicht zur geführten Höhe dazu.

Durch diese zentrische Anordnung, also der mittigen Anordnung bezüglich der geführten Breite und/oder Höhe können die Kräfte, welche vom Wickelgut während des Wickelns auf den Nadelschlitten und somit das Wickelmodul ausgeübt werden, optimal aufgefangen werden. Diese Kräfte wirken symmetrisch bezüglich des verfahrbaren Nadelschlittens. Damit wirken nur minimale Drehmomente auf den Nadelschlitten. Die Verkippneigung ist minimiert, was eine besonders vorteilhafte Verfahrbewegung ermöglicht.

In einem bevorzugten Ausführungsbeispiel des Wickelmodules weist das Modulgestell eine Führungseinrichtung auf, wobei der Nadelschlitten an der Führungseinrichtung entlang der ersten Richtung geführt ist. Die Führungseinrichtung kann vorzugsweise mindestens eine, vorzugweise zwei oder mehr, bezüglich des Nadelschlittens quer zur ersten Richtung gegenüberliegende und sich vorzugsweise entlang der ersten Richtung ersteckende Führungsschienen aufweisen. Der Nadelschlitten kann an diesen Führungsschienen verfahrbar gelagert sein. Vorzugsweise weist der Nadelschlitten für jede Führungsschiene eine Durchgangsausnehmung auf, durch welche die Führungsschiene hindurchgeführt ist. Damit ist eine umfangseitig geschlossene Umfassung der Führungsschiene durch den Nadelschlitten gegeben, was eine besonders präzise und robuste Führung erlaubt. Vorzugsweise greift er Nadelschlitten über Gleit-, Roll- oder andere passende Lager auf die Führungsschiene und ist so reibungsarm verfahrbar.

Zur Aktivierung der Wickelgutklemmeinrichtung weist das Wickelmodul in einem bevorzugten Ausführungsbeispiel weiter eine Drehmomentwelle auf. Über diese Drehmomentwelle kann eine Drehbewegung von aussen in das Wickelmodul eingebracht werden, welche zur Betätigung des Hebelaktuators, in bevorzugten Ausführungsbeispielen also zur Rotation des Exzenterelements führt.

Die Drehmomentwelle verläuft vorzugsweise parallel zur mindestens einen Führungsschiene. Die Drehmomentwelle selbst kann auch eine führende Wirkung für die Verfahrbewegung des Nadelschlittens bereitstellen. Vorzugsweise wird die Drehmomentwelle durch den Nadelschlitten hindurchgeführt. Vorzugsweise erstreckt sich die Drehmomentwelle im Wesentlichen über die Länge der mindestens einen Führungsschiene. Damit kann der Hebelaktuator, der im Nadelschlitten über die Länge der Führungsschiene(n) verfahrbar ist, über den im Wesentlichen gesamten Verfahrweg aktiviert werden.

Die vorliegende Erfindung betrifft weiter einen Modulrahmen, in welchen mehrere der erfindungsgemässen Wickelmodule einsetzbar sind. Der Modulrahmen weist dazu eine Vielzahl von vorzugsweise 2, 3, 4, 5, 6, 7, 8 oder mehr Aufnahmen für Wickelmodule, wobei vorzugsweise mindestens ein Wickelmodul in den Modulrahmen eingesetzt ist. Vorzugsweise ist eine gerade Anzahl von Aufnahmen vorgesehen. Die Aufnahmen sind zur lösbaren Befestigung der mehreren Wickelmodule ausgebildet. Zu jedem Wickelauftrag kann die passende Anzahl an Modulen einfach eingesetzt werden. Diese Modularität lässt einen besonders vielseitigen Einsatz des Modulrahmens bzw. Moduls oder der Wickelvorrichtung als ganzes zu.

Der Modulrahmen ist ein fester Rahmen zur Fassung mehrere Wickelmodule für die Simultanwicklung mehrerer Spulen. Durch die feste räumliche Verbindung der eingesetzten Wickelmodule kann dann der Modulrahmen als ganzes bewegt werden, um neben der Nadelschlittenbewegung (Z-Hub) eine weitere Hubbewegung, den Y-Hub, zu bewirken. Vorzugsweise stehen die Z- und die Y-Richtung im Wesentlichen senkrecht zueinander. Insbesondere kann die Z-Richtung in der Vertikalen (bspw. entlang der Gravitationsrichtung) und kann die Y-Richtung in der Horizontalen (als bspw. entlang des Wickeltisches) verlaufen.

Für die Zwecke der vorliegenden Beschreibung wird also die Bewegung des Nadelschlittens im Modulrahmen als Z-Hubbewegung, die Bewegung des Modulrahmens als Y-Hubbewegung bezeichnet. Die dritte Raumrichtungsbewegung (X-Hubbewegung) kann dann bspw. durch eine Schalteinheit, die eine Rotationsbewegung um die Z-Achse bewirken kann, ausgeführt. Die Y- und Z-Hubrichtungen und vorzugsweise auch die X-Hubrichtung stehen bevorzugt jeweils im Wesentlichen senkrecht zueinander.

Die vorliegende Erfindung ist insbesondere für die Nadelwickeltechnik geeignet. Andere Techniken können jedoch auch angewendet werden.

In einer Weiterbildung umfassend der Modulrahmen ein Einzelrotationselement oder mindestens ein Paar aus einem ersten und zweitem Rotationselement. Das Rotationselement ist mit jedem Wickelmodul koppelbar, sodass eine Rotationsbewegung des mindestens einen Rotationselements in die Verfahrbewegung jedes sich im Modulrahmen befindlichen Schlittens (Z-Hub) umwandelbar ist. Über die Kopplung kann also die Rotationsbewegung des Einzelrotationselements oder mindestens einen Paares aus einem ersten und zweiten Rotationselement in das Wickelmodul eingeleitet werden.

Vorzugsweise ist in der Weiterbildung des Modulrahmens mit einem Paar aus Rotationselementen das erste und zweite Rotationselement des Paares entlang der ersten Richtung voneinander beabstandet, vorzugsweise im Wesentlichen über eine Höhe des Wickelmoduls, rotierbar am oder im Modulrahmen gelagert. So kann bspw. die Rotationsbewegung vom Modulrahmen von unten und von oben in das Wickelmodul eingeleitet werden.

In einer Weiterbildung weist der Modulrahmen ferner eine Kopplungseinrichtung auf, welche die Rotationsbewegung des Einzelrotationselements oder des Paares von Rotationselementen in die Verfahrbewegung des mindestens einen sich im Modulrahmen befindlichen Nadelschlittens umsetzt. Entsprechend ist die Kopplungseinrichtung mit dem Einzelrotationselement bewegungsgekoppelt oder mit mindestens einem Rotationselement des mindestens einen Paares aus einem ersten und zweitem Rotationselement bewegungsgekoppelt, wobei die Kopplungseinrichtung weiter mit dem Nadelschlitten bewegungsgekoppelt ist, sodass der Nadelschlitten über die Rotationsbewegung des Einzelrotationselements oder des mindestens einen Rotationselements des mindestens einen Paares aus einem ersten und zweitem Rotationselement entlang der ersten Richtung bewegbar ist. Hierbei ist die Kopplung des Nadelschlittens und der Kopplungseinrichtung vorzugsweise einfach lösbar, um das Wickelmodul schnell in den Rahmen einzubauen und wieder auszubauen.

Es ist besonders bevorzugt in den Ausführungsbeispielen mit einem Paar von Rotationselementen, dass die die Rotationsbewegung des ersten und zweiten Rotationselementes des Paares koppelt, bspw. durch einen Synchronisationstrieb wie ein Gewinde oder ein Riementrieb. Dadurch ist eine synchrone und sauber geführte Bewegung möglich, was hilft, eine besonders hohe Wickelgeschwindigkeit zu erreichen.

In einer Weiterbildung des Modulrahmens ist das erste Rotationselement eine erste Welle oder eine an einer ersten Welle gelagerte erste Scheibe, insbesondere eine Zahnscheibe, und das zweite Rotationselement eine zweite Welle oder an einer zweiten Welle gelagerte zweite Scheibe, insbesondere eine Zahnscheibe. Die Kopplungseinrichtung kann dann als Riementrieb ausgebildet sein und weiter einen Schlittenriemen zur Bildung eines Riementriebs mit dem ersten und zweiten Rotationselement aufweisen. Der der Schlittenriemen ist vorzugsweise als Zahnriemen und die ersten und zweite Rotationselemente des Paares vorzugsweise als Zahnscheiben ausgebildet; zusammen bilden sie einen Zahnriementrieb.

Besonders bevorzugt ist, wenn der Modulrahmen eine oder zwei Wellen aufweist, wobei an jeder Welle eine Scheibe pro Wickelmodulaufnahme vorgesehen ist. Über diese Scheibe kann dann die Rotationsbewegung des Einzelrotationselements oder des Paares von Rotationselementen vom Rahmen in das Modul eingekoppelt werden, was zur linearen Z-Bewegung des Nadelschlittens führt.

Besonders bevorzugt ist eine Ausbildung mit zwei Wellen und entsprechend je einer Scheibe pro Welle für jedes Wickelmodul oder jeder Aufnahme, wobei der Schlittenriemen mit diesen zwei Riemen einen Riementrieb bildet. Dabei können erste und zweite Riemenenden vorzugsweise über Klemmplatten am ersten bzw. am zweiten Rotationselement (also an der Welle oder der drehfest auf der Welle angebrachten Scheiben) befestigt sein.

Der Schlittenriemen erstreckt sich vorzugsweise entlang der ersten Richtung. Damit ist eine besonders einfache Umsetzung der Rotationsbewegung des mindestens einen Rotationselements in die Linearbewegung des Nadelschlittens möglich.

Der offene Riemen erlaubt eine einfache Kopplung des Nadelschlittens an den Riementrieb. Insbesondere muss der Riemen nur einmal durch oder an den Schlitten geführt werden. Insbesondere muss das Wickelgut bei einem offenen Riemen nur einmal durch den Riemen geführt werden. Der Riemen kann zwecks einfachen Ausbaus des Moduls aus dem Modulrahmen lösbar direkt am Nadelschlitten befestigt sein. Der offene Riemen kann insbesondere über eine im Nadelschlitten integrierte Klemmplatte lösbar am Nadelschlitten befestigt sein, sodass der Riemen einfach durch Lösen der Klemmplatte vom Nadelschlitten entkoppelbar ist.

In einer Weiterbildung ist der Schlittenriemen also lösbar am Nadelschlitten befestigt, vorzugsweise über eine am Nadelschlitten angebrachte Klemmplatte. Andere Befestigungsmöglichkeiten sind auch denkbar.

Um eine möglichst synchrone Bewegung der Nadelschlitten zu erhalten, ist bevorzugt, dass alle der Einzelrotationselemente und/oder der ersten und zweiten Rotationselemente getrieben sind, vorzugsweise jeweils über mindestens einen ersten Servomotor oder über genau einen einzelnen ersten Servomotor. Die Bewegung kann weiter durch das Vorsehen von Synchronisationstrieben gleich gemacht werden. So können bspw. in Modulen mit zwei Wellen die beiden Wellen über einen Synchronisationstrieb, bspw. mindestens einen weiteren Riementrieb, gekoppelt werden. Diese Synchronisationsriementriebe können vorzugsweise endseitig der Wellen am Modulrahmen vorgesehen sein.

Bevorzugt ist also ein Modulrahmen, wobei die erste und zweite Welle über mindestens eine zusätzliche Synchronisationsvorrichtung drehfest verbunden ist, vorzugsweise so, dass die Wellen in die gleiche Richtung drehen; und
wobei die Synchronisationsvorrichtung vorzugsweise einen Synchronisationsriemen aufweist, welcher vorzugsweise als Zahnriemen ausgebildet ist.

In einer bevorzugten Ausführungsform kann also der Z-Hub aller eingesetzten Wickelmodule über einen einzelnen ersten Servomotor bewirkt werden.

Der einzelne erste Servomotor ist vorzugsweise jeweils über ersten Riementrieb mit dem/den ersten Rotationselement(en) und vorzugsweise über einen zweiten Riementrieb mit dem/den zweiten Rotationselement(en), falls vorhanden, gekoppelt.

Die hierin erwähnten Riementriebe weisen vorzugsweise eine Spannscheibe auf, über welche die Spannung des Riemens einstellbar ist.

Grundsätzlich können die hierin erwähnten Riementriebe auch durch Zahnradgetriebe, Schubstangen oder andere Bewegungsübertragungselemente ersetzt werden.

Es ist eine Aufgabe der vorliegenden Erfindung, eine Wickelvorrichtung anzugeben, welche ein verbessertes Wickeln von Spulen ermöglicht, vorzugsweise unter Anwendung der Nadelwickeltechnik.

Diese Aufgabe wird durch die Merkmale des Anspruchs 13 gelöst. Demgemäss wird eine Wickelvorrichtung zum automatischen Wickeln, vorzugsweise unter Anwendung der Nadelwickeltechnik, von Wickelgut, insbesondere von Draht in Nuten eines Wickelkörpers, zur Herstellung einer Spule für eine elektrische Maschine, insbesondere eines Ankers oder aussengenuteten Stators, vorgeschlagen.

Die Wickelvorrichtung umfasst ein Maschinengestell, eine Tischplatte mit mindestens einer Schalteinheit zur Aufnahme und Schaltung (X-Hub) des Wickelkörpers, und einen erfindungsgemässen Modulrahmen (für den synchronen Y-Hub, s. unten) wie hierin beschrieben, wobei das mindestens eine erfindungsgemässes Wickelmodul (welches den Z-Hub ermöglicht) wie hierin beschrieben vorzugsweise derart im Modulrahmen befestigt ist, dass die erste Richtung (Z) senkrecht zur zweiten Richtung (Y) steht. Da die Schalteinheit vorzugsweise eine Drehbewegung des Wickelkörpers senkrecht zur Tischplatte, also in Z-Richtung, verursacht, ist der X-Hub dann im Wesentlichen senkrecht zum Y- und Z-Hub.

In einer Weiterbildung der Wickelvorrichtung ist der Modulrahmen relativ zur Tischplatte entlang einer zweiten Richtung bewegbar ist und so alle im Modulrahmen befestigten Wickelmodule entlang der zweiten Richtung (Y-Hub) bewegbar sind.

Vorzugsweise weist die Wickelvorrichtung mindestens einen, vorzugsweise genau einen einzelnen, zweiten Servomotor zur Bewegung des Modulrahmens entlang der zweiten Richtung auf.

Gemäss einer besonders bevorzugten Ausführungsform sind also ein einzelner erster Servomotor zur Bewirkung des Z-Hubes (jedes Wickelmodul) und ein einzelner zweiter Servomotor zur Bewirkung des Y-Hubes (gesamter Modulrahmen) vorgesehen. Dies erlaubt einen leichten, kostengünstigen und zuverlässigen Aufbau der Wickelvorrichtung. Der X-Hub kann dann über einen oder mehrere dritte Servomotoren bewirkt werden. Es können also ein oder mehrere dritte Servomotoren vorgesehen sind, wobei, im Fall mehrerer dritter Servomotoren mit jedem dritten Servomotor mindestens eine, vorzugsweise genau zwei oder mehr, Schalteinheiten gleichzeitig (bspw. über eine Kopplung mittels Riementrieb) schaltbar sind.

Gemäss einer Weiterbildung der Wickelvorrichtung sind 2, 3, 4, 5, 6, 7, 8 oder mehr vorzugsweise einzeln entnehmbare Wickelmodule im gleichen Modulrahmen vorgesehen, wobei vorzugsweise eine gerade Anzahl von 2, 4, 6, 8 oder mehr Wickelmodulen im Modulrahmen befestigt sind oder befestigbar sind.

In einer bevorzugten Weiterentwicklung der Wickelvorrichtung sind mehrere oder alle Wickelgutklemmeinrichtungen, die in den jeweiligen Nadelschlitten der Wickelmodule untergebracht sind, untereinander gekoppelt, vorzugsweise über eine Schubstange bewegungsgekoppelt. Besonders bevorzugt ist, dass mehrere oder alle Wickelgutklemmeinrichtungen über eine, vorzugsweise dieselbe, Hydraulikeinrichtung, vorzugsweise einen hydraulischen, insbesondere pneumatischen, Zylinder, betätigbar sind. Andere Betätigungseinrichtungen, bspw. ein Bowdenzug oder Elektromotoren, sind hier jedoch auch denkbar.

Gemäss der vorliegenden Erfindung kann das erfindungsgemässe Wickelmodul, der erfindungsgemässe Modulrahmen und die erfindungsgemässe Wickelvorrichtung zum Wickeln von Spulen, insbesondere von Ankern oder aussengenuteten Statoren, für eine elektrische Maschine, verwendet werden. Hierbei kommt als Wickelgut vorzugweise Draht, insbesondere Draht mit einem Durchmesser von 0.5 Millimeter bis 2 Millimeter, vorzugsweise von mehr als 1 Millimeter, vorzugsweise von 1 Millimeter bis 1.5 Millimeter, zum Einsatz.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Ausführungsform einer erfindungsgemässen Wickelvorrichtung mit Modulrahmen und eingesetzten Wickelmodulen;
- Fig. 2: eine erste Detail-Querschnittansicht der Wickelvorrichtung nach Fig. 1;
- Fig. 3: in einer perspektivischen Frontansicht eine Ausführungsform des erfindungsgemässen Modulrahmens nach Fig. 1 mit 6 Wickelmodulen mit jeweils einem verfahrbaren Nadelschlitten;
- Fig. 4: in einer perspektivischen Rückansicht den Modulrahmen nach Fig. 3;
- Fig. 5: eine zweite Detail-Querschnittansicht der Wickelvorrichtung nach Fig. 1;
- Fig. 6: in einer perspektivischen Ansicht von vorne oben eine Detailansicht des Wickelmoduls mit dem Nadelschlitten nach Fig. 1;
- Fig. 7: in einer Seitenansicht das Wickelmodul nach Fig. 6;
- Fig. 8: einen Schnitt durch den Nadelschlitten nach Fig. 6;
- Fig. 9: eine Ausführungsform einer nach Fig. 8 im Nadelschlitten angeordneten Wickelgutklemmeinrichtung;
- Fig. 10: eine Ausführungsform einer im Modulrahmen angebrachten Hydraulikeinrichtung zur Betätigung der Wickelgutklemmeinrichtung der Wickelmodule; und
- Fig. 11: eine Ausführungsform einer Schaltvorrichtung mit zwei Schalteinheiten, die über einen Riementrieb mit einem Servomotor gekoppelt sind.

### BESCHREIBUNG BEVORZUGTER AUSFÜHRUNGSFORMEN

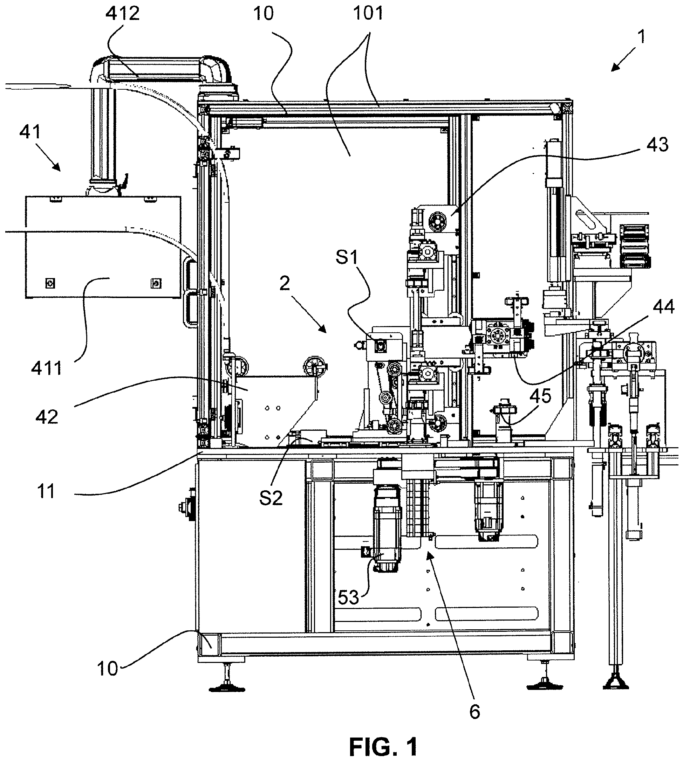

Anhand der Figuren 1 bis 11 werden nun Bevorzugte Ausführungsformen der vorliegenden Erfindung beschrieben. Als Wickelgut wird hier Metalldraht 8 verwendet.

**Figur 1** zeigt eine Wickelvorrichtung 1 mit einem Maschinengestell 10. Die Wickelvorrichtung 1 weist weiter einen Steuerschrank 41, eine Drahtzuführung 42, eine Drahtklemm- und Schneideeinheit 43 zum Anhängen des Drahtes in Kommutatoren 7, ein Beladehandling 44 und eine Schalteinheit 6 auf. Zudem weist die Wickelvorrichtung 1 einen Modulrahmen 12 mit einer Vielzahl von Wickelmodulen 2 auf.

Das Maschinengestell 10 ist geschweisst und aus Vierkantstahlrohren zusammengesetzt. In das Maschinengestell 10 ist eine Tischplatte 11 eingebaut, welche als Basis für weitere Funktionsgruppen dient. Das Maschinengestell 10 ist teilweise mit einer Sicherheitsverschalung 101 versehen. Die Sicherheitsverschalung 101 kann aus Nutprofilen aus Aluminium bestehen. Türen sind mit Tierschutzhaltern gesichert. Andere Konstruktionen sind möglich.

Der Steuerschrank 41 weist ein Bedienpanel zur Bedienung der Wickelvorrichtung 1 auf. Der Steuerschrank 41 ist auf der Rückseite im Maschinengestell 10 integriert. Das Bedienpanel 411 ist an einem Galgen 412 vor der Wickelvorrichtung 101 drehbar aufgehängt.

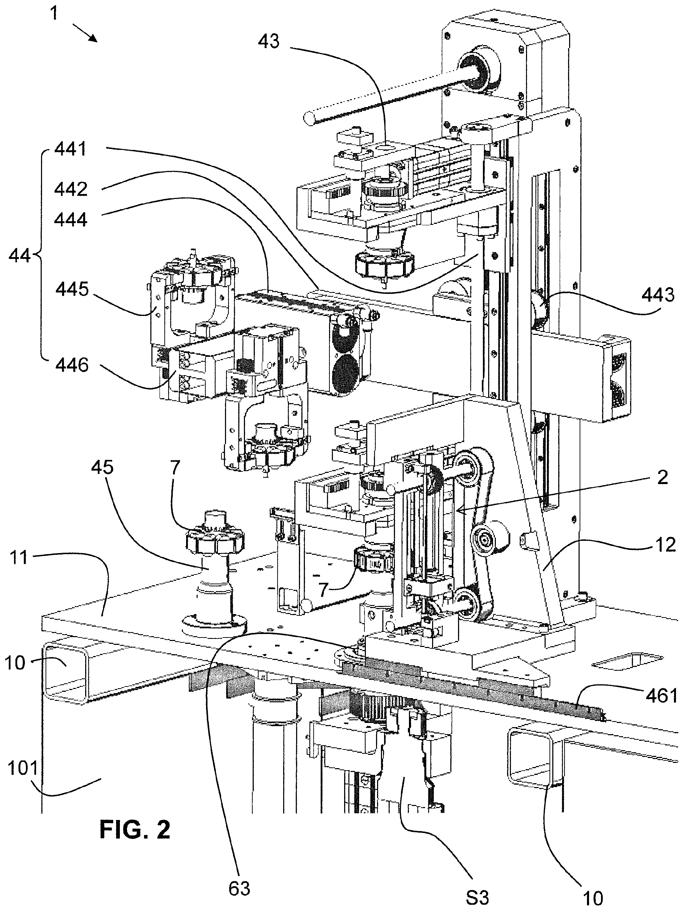

**Figur 2** zeigt einen Schnitt durch die Wickelvorrichtung 1 nach Fig. 1. Im Vordergrund (unten rechts) ist eines der Wickelmodule 2 zu erkennen, das im Modulrahmen 12 eingebaut ist. Der Modulrahmen 12 seinerseits ist auf dem Tisch 11 im Maschinengestell 10 gelagert. Der Modulrahmen 12 ist linear verfahrbar auf einer Führungseinrichtung 46 angeordnet (Y-Hub). Eine sich entlang der Y-Richtung erstreckende erste Führungsschiene 461 der Führungseinrichtung 46 ist in Figur 2 erkennbar.

Oberhalb des Modulrahmens 12 ist das Beladehandling 44 gezeigt. Das Beladehandling 44 weist zwei seitlich angeordnete Stützen 441 auf, an welchen jeweils ein quer zur Stütze 441 verlaufender Ausläufer 441 vorgesehen ist. Das Beladehandling 44 weist zwei lateral in der Wickelvorrichtung 1 auf dem Tisch 11 angeordnete Stützen 441 mit jeweils einem Ausleger 442 auf. Die Ausleger 442 sind parallel zueinander angeordnet und über zwei Servomotoren in zwei Achsen frei beweglich. Die Synchronisation der beiden Ausleger 442 erfolgt über eine Antriebstange in der Antriebsachse der Motoren. Die Bewegung der Ausleger 442 wird über einen umlaufenden Zahnriemen 443 in Kreuzanordnung erwirkt. Dieses Antriebskonzept wird auch als "T-Bot" bezeichnet. Auf dem Ausleger 442 ist beidseitig eine pneumatische Dreheinheit 444 angeflanscht. Zwischen diesen Dreheinheiten 444 sitzt der mittels der Dreheinheiten 444 drehbar gelagerte Aufnahmebalken 445 für die Produktgreifer 446. Pro Wickelmodul 2 sind immer zwei Greifer 446 einander gegenüber angeordnet. Dieses Doppelgreifersystem ermöglicht ein Be- und Entladen losgelöst vom Wickelprozess. Der Ablauf sieht wie folgt aus: Nachdem ein Produkt 7 mit der Spule 5 fertig bewickelt ist, fährt der eine Greifer 446 zu, eine Spanneinheit wird gelöst, das Handling 44 fährt nach oben weg, dreht um 180° und setzt das ungewickelte Produkt 7 mit dem anderen Greifer 446 in die Spanneinheit ein. Die geschieht simultan für alle Wickelmodule 2. Nachdem das Handling 44 weggefahren ist, kann der Wickelprozess gestartet werden. Gleichzeitig erfolgt nun das Entladen der gewickelten Statoren auf eine Ablage 45 (Warteposition) oder einen Werkstückträger.

Figur 2 zeigt weiter einen Teil der Drahtklemm-und Schneideeinheit 43 zum Anhängen des Drahtes 8 an Kommutatoren. Die Einheit 43 ist oberhalb des Wickelmoduls 2 angeordnet. Die Einheit 43 beinhaltet zwei Hauptfunktionen, nämlich (i) über vertikalen, pneumatischen Antrieb drückt eine Klemmhülse den Anfangsdraht 8 in einen Nutgrund des ersten Hakens am Kommutator, damit die ersten Windungen gewickelt werden können; und (ii) über einen horizontalen pneumatischen Antrieb wird über eine Zahnstange eine Messeraufnahmehülse in Drehbewegung versetzt. Über eine Schneidkante der Aussenhülse wird der Draht 8 getrennt und durch den Messerkörper um den Haken gebogen. Dadurch wird verhindert, dass das Drahtende den Draht 8 im benachbarten Haken berührt.

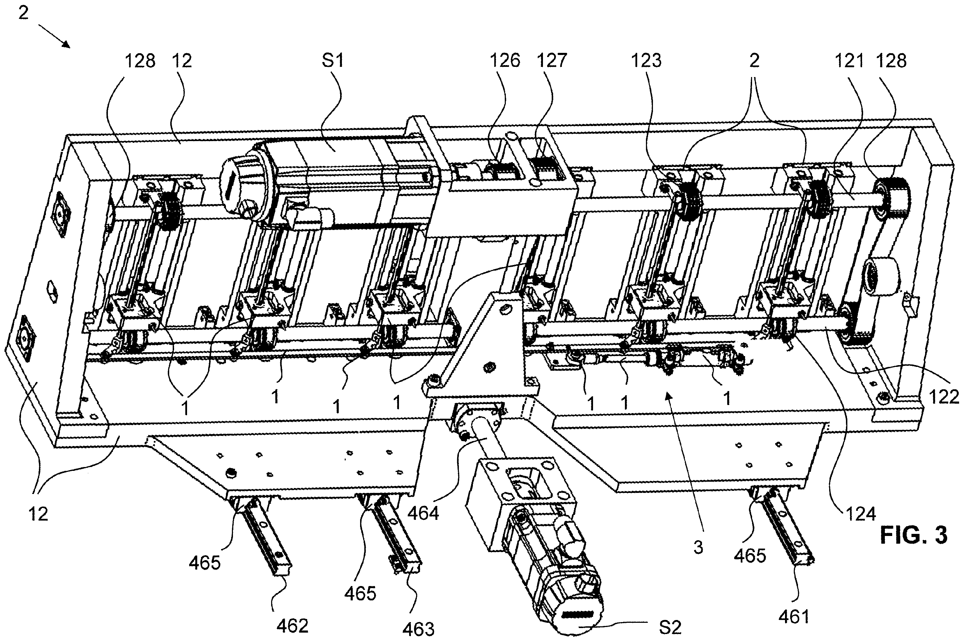

**Figur 3** zeigt den Modulrahmen 12 in einer Frontalansicht. Der Modulrahmen 12 weist zwei Trapez-förmige Seitenwände auf, welche über eine Bodenplatte und eine gegenüberliegend parallel zur Bodenplatte angeordnete Strebe miteinander verbunden sind. Zwischen den Seitenwänden erstreckt sich im oberen Bereich eine erste Welle 121 über die gesamte Länge des Modulrahmens 12. In Z-Richtung beabstandet zur ersten Welle 121 ist eine zweite Welle 122 angeordnet, welche sich ebenfalls über die gesamte Länge des Modulrahmens 12 erstreckt. Die erste und zweite Welle 121, 122 sind lateral jeweils über einen Synchronisationstrieb 128 miteinander drehfest verbunden. Hierzu sind endseitig auf jeder Welle 121, 122 jeweils drehfest angeordnete Scheiben angebracht. In Z-Richtung voneinander beanstandete Zahnscheiben des Synchronisationstriebes 128 sind nun über einen geschlossenen Zahnriemen bewegungsgekoppelt. Mittig zwischen den über den Riementrieb verbundenen Zahnscheiben ist jeweils eine Spannscheibe vorgesehen, welche für die stimmige Spannung des Riemens des Riementriebes 128 sorgt.

Über die Länge des Rahmens 12 sind nun sechs äquidistant verteilte Wickelmodule 2 angeordnet. Die erste Welle 121 und die zweite Welle 122 weisen jeweils für jedes Wickelmodul 2 eine drehfest auf der jeweiligen Welle 121, 122 angebrachte erste Zahnscheibe 123 bzw. zweite Zahnscheibe 124 auf. Auf der ersten und zweiten Welle 121, 122 sind also sechs erste Zahnscheiben 123 und sechs zweite Zahnscheiben 124 vorgesehen. Bei Ausführungsformen mit mehr oder weniger Aufnahmen für Wickelmodule 2 können natürlich entsprechend viele erste und zweite Zahnscheiben 123, 124 vorgesehen sein. Die Aufnahmen am Modulrahmen sind also durch die Zahnscheiben und entsprechende Befestigungsmittel zur Befestigung des jeweiligen Modulgestells 20 gekennzeichnet.

Über einen ersten Servomotor S1, welcher über einen ersten Riementrieb 126 auf die erste Welle 121 und über einen zweiten Riementrieb 127 auf die zweite Welle 122 greift, sind beide Wellen 121, 122 motorgetrieben und über die Synchronisationstriebe 128 bewegungsgekoppelt.

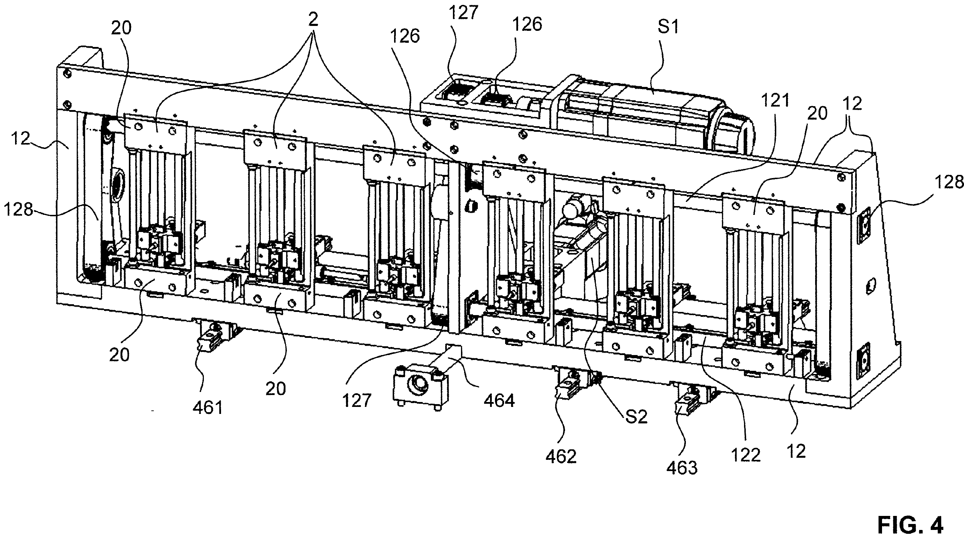

**Figur 4** zeigt den Modulrahmen 12 in einer Rückansicht. Es ist zu erkennen, dass Modulgestelle 20 der Wickelmodule 2 jeweils an der Bodenplatte und an der oberen strebe des Rahmens 12 in den Aufnahmen verschraubt sind.

Zudem ist in den Figuren 3 und 4 erkennbar, dass der Modulrahmen 12 auf der Führungseinrichtung 46 gelagert ist, welche die erste Führungsschiene 461 und die zwei weiteren Schienen 462, 463 aufweist. Der Modulrahmen 12 weist den Führungsschienen 461 bis 463 zugeordnete Fahreinheiten 465 auf, auf welchen der Modulrahmen 12 dann auf den Schienen 461 bis 463 verfahren werden kann. Grundsätzlich würden natürlich auch weniger Schienen ausreichen, insbesondere liefern die beiden äusseren Schienen 461, 462 eine stabile Führung und die dritte Führungsschiene 463 reduziert das Spiel weiter.

Bewegt wird nun der Modulrahmen 12 in der Y-Richtung über einen zweiten Servomotor S2, welcher über eine sich in Y-Richtung erstreckende Stange 464 auf den Modulrahmen 12 greift und diesen in Y Richtung beweglich macht (Y-Hub).

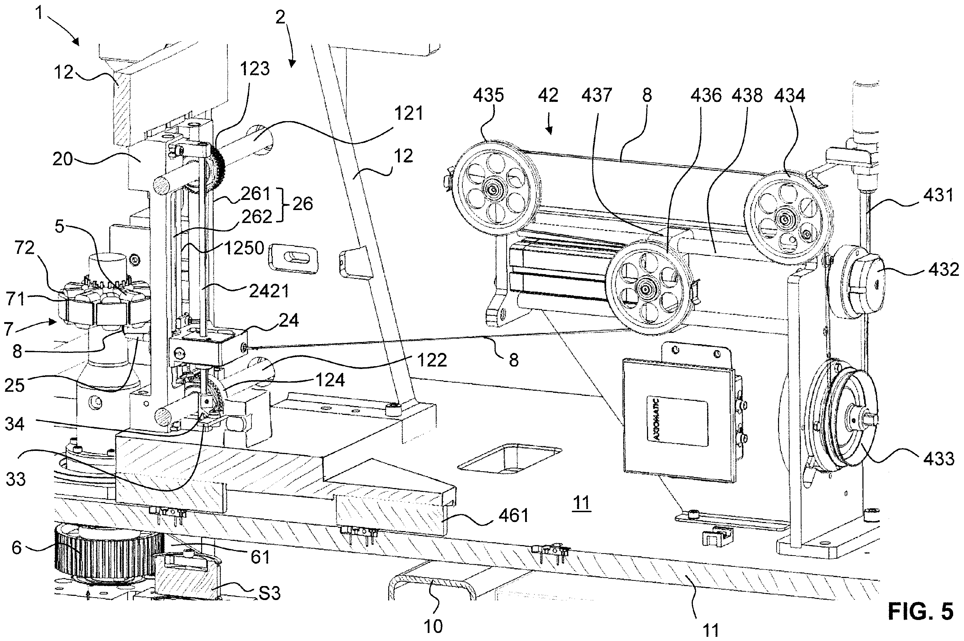

**Figur 5** zeigt einen Querschnitt durch die Wickelvorrichtung 1. Es ist die auf dem Tisch 11 des Maschinengestells 10 angeordnete Drahtzuführung 42 erkennbar. Die Drahtzuführung 42 ist mit Drahtbremsen und Drahtkompensationsmechanik ausgestattet. Die Drahtzuführung 42 führt den Draht über einen Führungsschlauch zu. Nach einer Vorbremse 432 wird der Draht 8 um eine Vulkollan-beschichtete Bremsrolle 433 der Magnetpulverbremse gewickelt (540°) und in vertikaler Richtung um eine erste Umlenkrolle 434 nach einer 90°-Umlenkung um eine zweite Umlenkrolle 435 und von da zurück auf die Kompensationsrolle 436 geführt. Die Kompensationsrolle 436 wird auf einem Führungsschlitten 437, in horizontaler Richtung durch einen pneumatischen Zylinder 438 mit Leichtlaufeigenschaften, gegen das Wickelmodul 2 gedrückt. Dieser Kompensationsdruck wird über ein Proportionalventil über eine Steuerung eingestellt. So wird gewährleistet, dass beim Wickelprozess nie loser Draht 8 entsteht und der Drahtzug konstant bleibt. Die einzelnen Drahtabroller (nicht gezeigt) sind hinter dem Wickelmodul 2 auf die Tischplatte 11 der Wickelvorrichtung 1 geschraubt und so für den Drahtwechsel optimal zugänglich.

Weiter, auf der linken Seite, ist in Figur 5 der Modulrahmen 12 erkennbar und ein Wickelmodul 2 mit Modulgestell 20. im oberen Bereich des Wickelmoduls 2 ist wiederum die erste Welle 121 mit der erste Zahnscheibe 123 angeordnet, im unteren Bereich die zweite Welle 122 mit der zweiten Zahnscheibe 124. Die beiden Zahnscheiben 123, 124 sind über einen sich entlang der Z-Richtung erstreckenden offenen Zahnriemen 1250 einer Kopplungseinrichtung 125 bewegungsgekoppelt. Der Zahnriemen 1250 ist am Nadelschlitten 24 befestigt. Der Nadelschlitten 24 ist weiter zwischen zwei im Wickelmodul 2 vorgesehenen Führungsschienen 261, 262 angeordnet und so über Bewegung der Wellen 121, 122 entlang der Führungsschienen 261, 262 in Z-Richtung verfahrbar. Die Führungsschienen 261, 262 sind durch die Ausnehmungen 246 (Durchgangsöffnungen) durch den Nadelschlitten 24 geführt. Der Nadelschlitten 24 ist im Bereich der Ausnehmungen 246 mit Lagern 2460 versehen, sodass ein möglichst reibungsfreies Gleiten des Nadelschlittens 24 entlang der Führung 26 möglich ist.

Vor dem Modul 2 steht der Wickelkörper 7, welcher auf der Schalteinheit 6 aufgespannt ist. Der Wickelkörper 7 weist eine Vielzahl von Zähnen 72 auf, welche über Nuten 72 getrennt sind. Das Wickelmodul 2 weist einen in Z-Richtung verfahrbaren Nadelschlitten 24 mit einer Nadel 25 auf, aus welcher der Draht 8 in die Nuten 71 zur Umwicklung der Zähne 72 eingelegt wird, womit die Spule 5 gebildet wird.

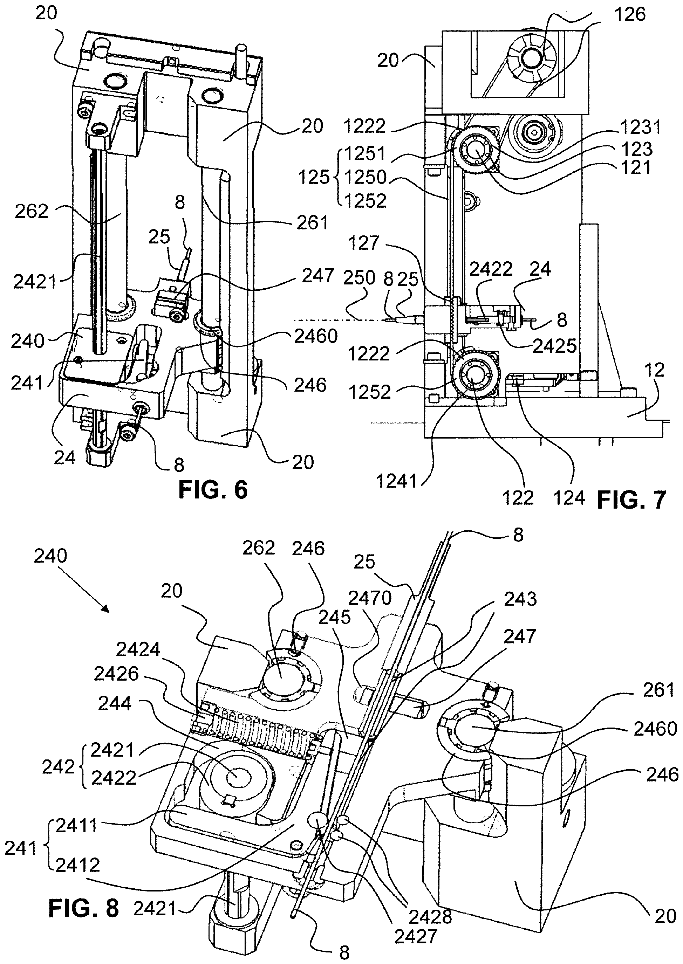

**Figur 6** zeigt das Wickelmodul 2 in einer perspektivischen Ansicht von oben. **Figur 7** zeigt das Wickelmodul 2 im Rahmen 12 in einer Ansicht von der Seite.

Man erkennt das im Wesentlichen quaderförmige Modulgestell 20 mit der mittigen Durchgangsöffnung. Seitlich sind die beiden Führungsschienen 261 und 262 angebracht. Zwischen diesen Schienen 261, 262 ist der Nadelschlitten 24 in der Z-Richtung verfahrbar angeordnet.

Der Nadelschlitten 24 weist eine weitere Durchgangsöffnung zur Durchführung einer Drehmomentwelle 2421 auf. Die Drehmomentwelle 2421 greift auf eine Wickelgutklemmeinrichtung 240, welche ihm man Nadelschlitten 24 angeordnet ist. Figur 6 zeigt wie der Draht 8 durch eine Öffnung in das Innere des Nadelschlitten geführt wird und am gegenüberliegenden Ende durch die Nadel 25 entlang der Nadelachse 250 (s. Fig. 7) wieder austritt.

Figur 7 zeigt zudem den ersten Riementrieb 126, über welchen der erste Servomotor S1 auf die erste Welle 121 greift. Auch die Spannscheibe des ersten Riementriebs 126 ist erkennbar.

Zudem sind in Figur 7 die Details der Kopplungseinrichtung 125 erkennbar. Die erste Riemenscheibe 123 mit Zahnung 1231 ist über eine Klemmplatte 1222 mit einem oberen Abschnitt 1251 des Zahnriemens 1250 des Riementriebes 125 verbunden. Der Riemen 125 wird durch die Öffnung 2470 (s. Fig. 8) durch den Nadelschlitten 24 geführt und mit der Klemmplatte 247 (s. auch Figuren 6 und 8) festgeklemmt. Im unteren Bereich 1252 ist der Riemen 1250 über eine weitere Klemmplatte 1222 mit der unteren zweiten Zahnscheibe 124 mit Zahnung 1241 verbunden. In der Situation nach Figur 7 ist erkennbar, dass der Riemen 1250 dann grossen Teil bereits um die Zahnscheibe 124 gewickelt ist, mit Zahnung 1253 in die Zahnung 1241 der Scheibe 124 eingreift und daher sich der Nadelschlitten 24 in einer unteren Position befindet.

In den Figuren 6 und 7 ist auch der Klemmhebel 241 der Wickelgutklemmeinrichtung 240 zu erkennen.

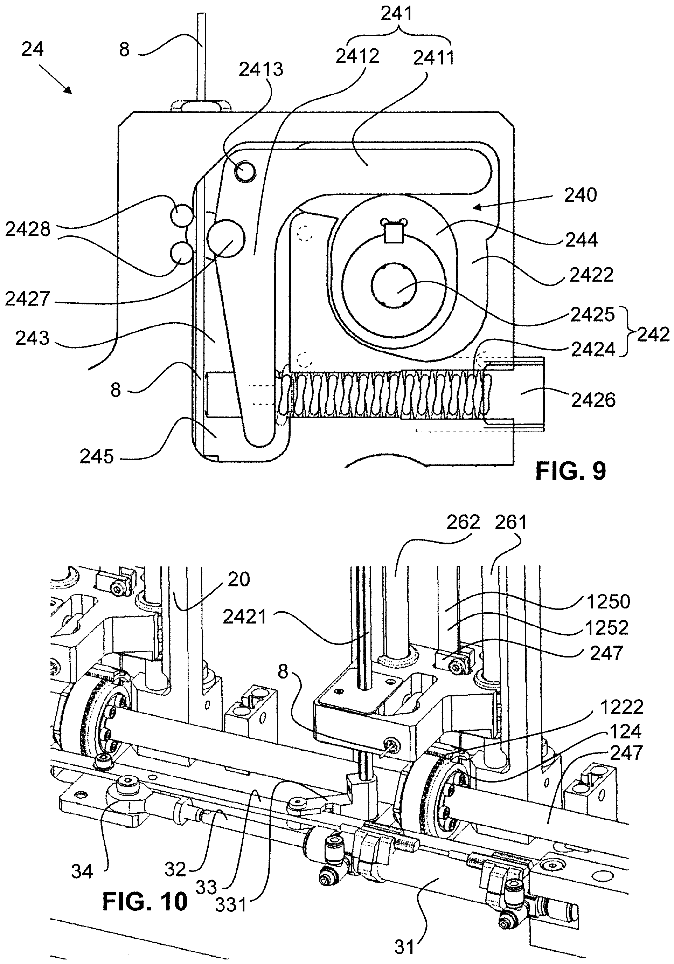

**Figuren 8** und **9** zeigen einen Schnitt durch den Nadelschlitten 24, wodurch die Wickelgutklemmeinrichtung 240 erkennbar ist. Die Wickelgutklemmeinrichtung 42 weist den Klemmhebel 241 auf, welcher über einen Hebelaktuator 242 bedarfsgerecht verschwenkbar ist. Die Wickelgutklemmeinrichtung 42 weist überdies ein Exzenterelement 242 auf. Der Klemmhebel 241 ist ein zweiarmiger Klemmhebel mit einem ersten Armabschnitt 2411 und einem zweiten Armabschnitt 2412. Der Hebel 241 ist L-förmig ausgebildet und in einer im Wesentlichen L-förmigen Ausnehmung 245 im Nadelschlitten 24 mittig bezüglich der Z-Richtung angeordnet. Der Hebel 241 ist am Hebellager 2413 verschwenkbar im Nadelschlitten 24 gelagert.

Über den ersten Armabschnitt 2411 tritt der Klemmhebel 241 mit dem Exzenterelement 242 in Wechselwirkung. Das Exzenterelement 242 ist drehfest an der Drehmomentwelle 2421, welche die Achse des Exzenterelements 242 bildet, angeordnet. Wird nun die Drehmomentwelle 2421 rotiert, so rotiert das Exzenterelement 242 entsprechend mit. In Figuren 8 und 9 ist erkennbar, dass das Exzenterelement 242 eine exzentrische Scheibe ist, welche je nach Drehlage mit einer Verdickung auf den ersten Hebelabschnitt 2411 drücken und so den in der Klemmposition vorgespannten Klemmhebel 241 in die Freigabeposition drücken kann.

Über den zweiten Armabschnitt 2412, welcher Wesentlichen parallel zum Wickelgutkanal 243 verläuft, kann der Klemmhebel 241 in Klemmposition auf ein allfällig im Wickelgutkanal 243 eingeführten Draht 8 greifen und diesen dort festklemmen, sodass er sich weder um die eigene Achse verdreht noch entlang seiner Längsrichtung verrutscht. Der Hebelarm 2412 ist dazu mit einem Klemmelement 2427 ausgerüstet, welches direkten Kontakt mit dem Draht 8 macht. Gegenüber des Klemmelementes 2427 sind die Widerlager 2428 vorgesehen, sodass ein optimaler Klemmpunkt im Nadelschlitten 24 bereitgestellt werden kann. Der zweite Hebelabschnitt 2412 verjüngt sich zu seinem freien Ende hin. Zudem befindet sich am freien Ende des Hebelarmes 2412 der Angriffspunkt eines Federelementes 2424 zur Vorspannung des Hebels 241 in Klemmposition. Das Federelement 2424 ist als Druckfeder ausgebildet, welche über die Justierschraube 2426 in ihrer Spannung einstellbar ist.

Die Figur 9 zeigt ebenfalls für die Durchführung des Drahtes 8 vorgesehene Eintrittsöffnung in den und Austrittsöffnung aus dem Nadelschlitten 24. Die Eintrittsöffnung und die Austrittsöffnung sind durch den Wickelgutkanal 243 verbunden. Der Wickelgutkanal 243 verläuft im Wesentlichen mittig zwischen den beiden Führungsschienen 261, 262 und im Wesentlichen mittig bezüglich der Z-Erstreckung des Nadelschlittens 24. Dadurch werden Drehmomente auf den Nadelschlitten 24 minimiert.

**Figur 10** zeigt eine Hydraulikeinrichtung 3 zur Bewegung der jeweiligen Drehmomentwellen 2421. Die Drehmomentwelle 2421 sind am unteren Ende über L-förmige Stücke 331 mit einer parallel zum Tisch 11 verlaufenden Schubstange 33 verbunden. Diese Schubstange 33 ist über eine Anlenkung 34 mit einer Betätigungskolbenstange 32, die ihn einem pneumatischen Betätigungszylinder 31 der Hydraulikeinrichtung 3 gelagert ist, verbunden. Mit der Betätigung des Betätigungszylinders 31 wird also die Schubstange 33 bezüglich dem Zylinder 31 nach vorne oder zurück bewegt, sodass die L- förmigen Verbindungsstücke 331 und damit die Drehmomentwelle 4421 rotiert werden. Entsprechend sind also durch die Betätigung der Hydraulikeinrichtung 3 die Exzenterelemente 2422 der montierten Wickelmodule 2 rotierbar.

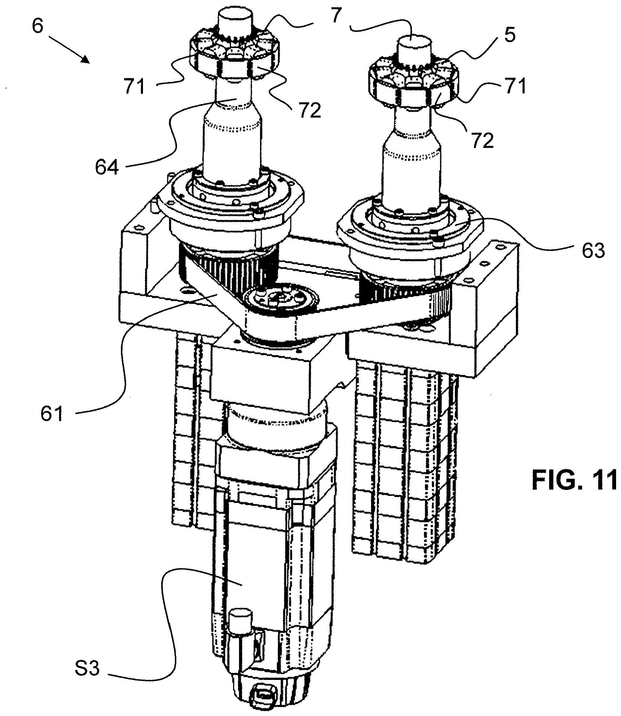

**Figur 11** zeigt die Schalteinheit 6 weist eine Schaltachse 62 auf und wird durch ein doppelreihiges Kugellager 63, in einem Aufnahmegehäuse das in die Tischplatte 11 eingesetzt ist, gelagert. Der Antrieb erfolgt über einen Zahnriementrieb 61. Im Aufnahmedorn 64 ist eine Spanneinheit bestehend aus einer Spannzange eingesetzt. Diese Spannzange ist auf den Wellendurchmesser des Wickelkörpers 7 ausgelegt und wird über ein Tellerfederpaket gespannt. Um diese Spannung zu lösen, kann von unten mit einem Dorn gegen das Tellerfederpaket gedrückt werden. Dadurch öffnet sich die Spannzange, da sie von einem Konus abgehoben wird. Die Schaltachsen 62 werden paarweise über einen Zahnriementrieb 62 angetrieben. Ein dritter Servomotor S3 wird mittig zu den Achsen 62, seitlich versetzt angebaut. Diese Schalteinheit 6 kann nun mehrfach verbaut werden und ermöglicht Maschinenvarianten von 4, 6 oder 8 Wickelspindeln. Anstelle von Spanneinheiten mit Spannzangen (spannen von Wellen) können auch Aufnahmen für Statoren mit Spanndornen ausgerüstet werden (spannen in Bohrungen).

**BEZUGSZEICHENLISTE**

| | | | |
|---|---|---|---|
| 1 | Wickelvorrichtung | 2422 | Exzenterelement/-scheibe |
| 10 | Maschinengestell | 2423 | Spannvorrichtung |
| 101 | Sicherheitsverschalung | 2424 | Federelement |
| 11 | Tischplatte | 2425 | Achse |
| | | 2426 | Justierschraube |
| 12 | Modulrahmen | 2427 | Klemmelement |
| 120 | Aufnahme | 2428 | Widerlager |
| 121 | erste Welle | 243 | Wickelgutkanal |
| 1211 | Zahnung von 123 | 244 | Ausnehmung für 242 |
| 1212 | Klemmplatte | 245 | Ausnehmung für 241 |
| 122 | zweite Welle | 246 | Ausnehmung für 261 bzw. 262 |
| 1222 | Klemmplatte | 2460 | Lager |
| 123 | erstes Rotationselement, | 247 | Klemmplatte |
| | Scheibe | 2470 | Ausnehmung in 24 für 247 |
| 1231 | Zahnung von 123 | | |
| 124 | zweites Rotationselement, Scheibe | 25 | Nadel |
| | | 250 | Nadelachse |
| 1241 | Zahnung von 124 | | |
| 125 | Kopplungseinrichtung | 26 | Führungseinrichtung für 24 |
| 1250 | Schlittenriemen | 261 | erste Führungsschiene von 26 |
| 1251 | erstes Ende von 1250 | 262 | zweite Führungsschiene von 26 |
| 1252 | zweite Ende von 1250 | | |
| 1253 | Zahnung von 1250 | | |
| 126 | erster Riementrieb | | |
| 127 | zweiter Riementrieb | 3 | Hydraulikeinrichtung, |
| 128 | Synchronisationsriementrieb | | pneumatischer Zylinder |
| | | 31 | Betätigungszylinder |
| 2 | Wickelmodul | 32 | Betätigungskolbenstange |
| 20 | Modulgestell | 33 | Schubstange |
| | | 331 | Verbindung 2421 und 33 |
| 24 | Nadelschlitten | 34 | Anlenkung |
| 240 | Wickelgutklemmeinrichtung | | |
| 241 | Klemmhebel | 41 | Steuerschrank |
| 2411 | erster Hebelarm | 441 | Bedienpanel |
| 2412 | zweiter Hebelarm | 442 | Galgen |
| 2413 | Hebellager | 42 | Drahtzuführung mit |
| 242 | Hebelaktuator | | Drahtbremsen und |
| 2421 | Drehmomentwelle mechanik | | Drahtkompensations-mechanik |
| | | 461 | erste Führungsschiene von 46 |
| 43 | Drahtklemm- und Schneideeinheit zum Anhängen des Drahtes in Kommutatoren | 462 | zweite Führungsschiene von 46 |
| | | 463 | dritte Führungsschiene von 46 |
| 431 | Führungsschlauch | 464 | Stange |
| 432 | Vorbremse | 465 | Fahreinheit |
| 433 | Bremsrolle | | |
| 434 | erste Umlenkrolle | | |
| 435 | zweite Umlenkrolle | 5 | Spule |
| 436 | Kompensationsrolle | | |
| 437 | Führungsschlitten für 436 | 6 | Schalteinheit |
| 438 | pneumatischer Zylinder | 61 | Riementrieb |
| | | 62 | Schaltachse |
| 44 | Beladehandling | 63 | Kugellager |
| 441 | Stütze | 64 | Aufnahmedorn |
| 442 | Ausleger | | |
| 443 | Zahnriemen in Kreuzanordnung | 7 | Wickelkörper |
| | | 71 | Nuten |
| 444 | pneumatische Dreheinheit | 72 | Wickelzahn |
| 445 | Aufnahmebalken | | |
| 446 | Produktegreifer | S1 | erster Servomotor |
| | | S2 | zweiter Servomotor |
| 45 | Warteposition | S3 | dritter Servomotor |
| 46 | Führungseinrichtung für 2 | | |

## Patentansprüche

1. Wickelmodul (2) für eine Wickelvorrichtung (1) zum automatischen Wickeln von Wickelgut (8), insbesondere von Draht in Nuten (71) eines Wickelkörpers (7), zur Herstellung einer Spule (5) für eine elektrische Maschine, insbesondere einen Rotor und/oder Stator, besonders bevorzugt einen Anker oder aussengenuteten Stator, wobei das Wickelmodul (2) umfasst:
ein Modulgestell (20);
einen Nadelschlitten (24) mit einer Nadel (25), wobei der Nadelschlitten (24) entlang einer ersten Richtung (R₁) verfahrbar im Modulgestell (20) gelagert ist;
**dadurch gekennzeichnet,**
**dass** das Wickelmodul (2) weiter eine Wickelgutklemmeinrichtung (240) zur Klemmung des Wickelgutes (8) aufweist; wobei die Wickelgutklemmeinrichtung (240) ausgebildet ist, um das Wickelgut (8) gegen Verdrehen um und gegen Verschieben entlang der Nadelachse (250) zu sichern; und wobei die Wickelgutklemmeinrichtung (240) im oder am Nadelschlitten (24) angeordnet ist.

2. Wickelmodul (2) nach Anspruch 1, wobei die Wickelgutklemmeinrichtung (240) einen am oder im Nadelschlitten (24) gelagerten Klemmhebel (241) aufweist, welcher bewegbar ist, insbesondere verschwenkbar ist, zwischen:
einer Klemmposition, in welcher das Wickelgut (8) beim bestimmungsgemässen Gebrauch des Wickelmoduls (2) vom Klemmhebel (241) geklemmt ist;
einer Freigabeposition, in welcher der Klemmhebel (241) das Wickelgut (8) beim bestimmungsgemässen Gebrauch des Wickelmoduls (2) zur Bewegung relativ zur Nadel (25) freigibt; und
wobei der Klemmhebel (241) vorzugsweise ein zweiarmiger Hebel ist und/oder ein L-förmiger Hebel ist.

3. Wickelmodul (2) nach Anspruch 2, wobei der Klemmhebel (241) über einen Hebelaktuator (242) bewegbar ist, wobei der Hebelaktuator (242) ein bewegbar gelagertes Exzenterelement (2422) aufweist;
wobei der Klemmhebel (241) und/oder das Exzenterelement (2422) vorzugsweise vorgespannt ist, insbesondere in der Klemmposition, mittels einer Spannvorrichtung (2428); wobei die Spannvorrichtung vorzugsweise ein Federelement (2424), insbesondere eine Druck- und/oder Zugfederelement, vorzugsweise eine Spiralfeder, aufweist; und
wobei der Hebelaktuator (242) vorzugsweise über eine Hydraulikeinrichtung, vorzugsweise einen pneumatischen Zylinder, zur Bewegung des Klemmhebels (241) betätigbar ist.

4. Wickelmodul (2) nach einem der Ansprüche 1 bis 3, wobei der Nadelschlitten (24) einen vorzugsweise radial umlaufend geschlossenen Wickelgutkanal (243) zur Führung des Wickelguts (8) durch den Nadelschlitten (24) zur Nadel (25) aufweist;
wobei dieser Wickelkanal (243) sich vorzugsweise zentrisch durch den Nadelschlitten (24) erstreckt.

5. Wickelmodul (2) nach einem der Ansprüche 1 bis 4, wobei das Modulgestell (20) eine Führungseinrichtung (26) aufweist, wobei der Nadelschlitten (24) an der Führungseinrichtung (26) entlang der ersten Richtung (R₁) geführt ist; und
wobei die Führungseinrichtung (26) vorzugsweise mindestens eine, vorzugweise zwei, bezüglich des Nadelschlittens (24) quer zur ersten Richtung (R₁) gegenüberliegende und sich vorzugsweise entlang der ersten Richtung (R₁) ersteckende Führungsschienen (261;262) aufweist.

6. Wickelmodul (2) nach Anspruch 3 oder Wickelmodul (2) nach Anspruch 3 und Anspruch 4 und/oder 5, welches weiter eine Drehmomentwelle (2421) aufweist zur Rotation des Exzenterelements (2422); und
wobei die Drehmomentwelle (2421) vorzugsweise parallel zur mindestens einen Führungsschiene (261;262) verläuft und sich vorzugsweise im Wesentlichen über die Länge der mindestens einen Führungsschiene (261;262) erstreckt.

7. Modulrahmen (12) für mehrere Wickelmodule (2) nach einem der Ansprüche 1 bis 6, umfassend mindestens ein Wickelmodul (2) nach einem der Ansprüche 1 bis 6, wobei der Modulrahmen (12) mehrere Aufnahmen (120) zur lösbaren Befestigung der mehreren Wickelmodule (2) aufweist.

8. Modulrahmen (12) nach Anspruch 7, weiter umfassend ein Einzelrotationselement (121;122;123;124) oder mindestens ein Paar aus einem ersten und zweitem Rotationselement (121;122;123;124), wobei das erste und zweite Rotationselement (121;122,123;124) des Paares entlang der ersten Richtung (R₁) voneinander beabstandet rotierbar am oder im Modulrahmen (12) gelagert sind;
wobei der Modulrahmen (12) weiter eine Kopplungseinrichtung (23) umfasst;
wobei die Kopplungseinrichtung (23) mit dem Einzelrotationselement (121;122;123;124) bewegungsgekoppelt ist oder mit mindestens einem Rotationselement (121;122;123;124) des mindestens einen Paares aus einem ersten und zweitem Rotationselement (121;122;123;124) bewegungsgekoppelt ist, wobei die Kopplungseinrichtung (23) vorzugsweise so ausgebildet ist, dass sie die Rotationsbewegung des ersten und zweiten Rotationselementes (121;122,123;124) des Paares koppelt;
wobei die Kopplungseinrichtung (23) weiter mit dem Nadelschlitten (24) bewegungsgekoppelt ist;
sodass der Nadelschlitten (24) über die Rotationsbewegung des Einzelrotationselements (121;122;123;124) oder des mindestens einen Rotationselements (121;122;123;124) des mindestens einen Paares aus einem ersten und zweitem Rotationselement (121;122;123;124) entlang der ersten Richtung (R₁) bewegbar ist.

9. Modulrahmen (12) nach Anspruch 8, wobei das erste Rotationselement (121;122) eine erste Welle (121) oder eine an einer ersten Welle (121) gelagerte erste Scheibe (123) und das zweite Rotationselement (122;123) eine zweite Welle (122) oder an einer zweiten Welle (122) gelagerte zweite Scheibe (124) ist; und
wobei die Kopplungseinrichtung (23) einen Schlittenriemen (1250) zur Bildung eines Riementriebs mit dem ersten und zweiten Rotationselement (121;122,123;124) aufweist; und
wobei der Schlittenriemen (1250) vorzugsweise als Zahnriemen und die ersten und zweite Rotationselemente (121;122,123;124) des Paares vorzugsweise als Zahnscheiben ausgebildet sind und zusammen einen Zahnriementrieb bilden.

10. Modulrahmen (12) nach Anspruch 9, wobei der Schlittenriemen (1250) offen ist; und
wobei erste und zweite Riemenenden (231,232) vorzugsweise über Klemmplatten (212,222) am ersten bzw. am zweiten Rotationselement (121;122;123;124) befestigt sind; und
wobei sich der offene Schlittenriemen (1250) vorzugsweise entlang der ersten Richtung (R₁) erstreckt.

11. Modulrahmen (12) nach Anspruch 9 oder 10, wobei der Schlittenriemen (1250) am Nadelschlitten (24) lösbar befestigt ist, vorzugsweise über eine am Nadelschlitten (24) angebrachte Klemmplatte (247).

12. Modulrahmen (12) nach einem der Ansprüche 8 bis 10, wobei alle der Einzelrotationselemente (121;122,123;124) und/oder der ersten und zweiten Rotationselemente (121;122,123;124) getrieben sind, vorzugsweise jeweils
über mindestens einen ersten Servomotor (S₁), oder
über genau einen einzelnen ersten Servomotor (S₁); wobei der einzelne erste Servomotor (S₁) vorzugsweise über einen ersten Riementrieb (126) mit dem/den ersten Rotationselement(en) (121;122) und vorzugsweise über einen zweiten Riementrieb (127) mit dem/den zweiten Rotationselement(en) (123,124) gekoppelt ist.

13. Wickelvorrichtung (1) zum automatischen Wickeln, vorzugsweise unter Anwendung der Nadelwickeltechnik, von Wickelgut (8), insbesondere von Draht in Nuten (71) eines Wickelkörpers (7), zur Herstellung einer Spule (5) für eine elektrische Maschine, insbesondere eines Ankers oder aussengenuteten Stators, wobei die Wickelvorrichtung (1) umfasst:
ein Maschinengestell (10);
eine Tischplatte (11) mit mindestens einer Schalteinheit (6) zur Aufnahme und Verschaltung des Wickelkörpers (7);
einen Modulrahmen (12) nach einem der Ansprüche 8 bis 12; und
wobei das mindestens eine Wickelmodul (2) vorzugsweise derart im Modulrahmen (12) befestigt ist, dass die erste Richtung (R₁) senkrecht zur zweiten Richtung (R₂) steht.

14. Wickelvorrichtung (1) nach Anspruch 13, wobei der Modulrahmen (12) relativ zur Tischplatte (11) entlang einer zweiten Richtung (R₂) bewegbar ist und so alle im Modulrahmen (12) befestigten Wickelmodule (2) entlang der zweiten Richtung (R₂) bewegbar sind; und
wobei die Wickelvorrichtung (1) vorzugsweise mindestens einen, vorzugsweise genau einen einzelnen, zweiten Servomotor (S₂) zur Bewegung des Modulrahmens (12) entlang der zweiten Richtung (R₂) aufweist.

15. Wickelvorrichtung (1) nach Anspruch 13 oder 14, wobei 2, 3, 4, 5, 6, 7, 8 oder mehr vorzugsweise einzeln entnehmbare Wickelmodule (2) im gleichen Modulrahmen (12) vorgesehen sind; und
wobei vorzugsweise eine gerade Anzahl von 2, 4, 6, 8 oder mehr Wickelmodulen (2) im Modulrahmen (12) befestigt sind oder befestigbar sind; und/oder
ein oder mehrere dritte Servomotoren (S₃) vorgesehen sind, wobei mit jedem dritten Servomotor (S₃) mindestens eine, vorzugsweise genau zwei oder mehr, Schalteinheiten (6) schaltbar sind.

16. Wickelvorrichtung (1) nach einem der Ansprüche 13 bis 15, wobei mehrere oder alle Wickelgutklemmeinrichtungen (240) untereinander gekoppelt, vorzugsweise über eine Schubstange (2426) bewegungsgekoppelt, und über eine, vorzugsweise dieselbe, Hydraulikeinrichtung, vorzugsweise einen hydraulischen, insbesondere pneumatischen, Zylinder, betätigbar sind.

17. Verwendung eines Wickelmodules (2) nach einem der Ansprüche 1 bis 6, eines Modulrahmens (12) nach einem der Ansprüche 7 bis 12 oder einer Wickelvorrichtung (1) nach einem der Ansprüche 13 bis 16 zum Wickeln von Spulen (5), insbesondere von Ankern oder aussengenuteten Statoren, für eine elektrische Maschine;
wobei als Wickelgut (8) vorzugweise Draht, insbesondere Draht mit einem Durchmesser von 0.5 Millimeter bis 2 Millimeter, vorzugsweise von mehr als 1 Millimeter, vorzugsweise von 1 Millimeter bis 1.5 Millimeter, verwendet wird.

## Claims

1. A winding module (2) for a winding device (1) for automatically winding winding material (8), in particular wire in grooves (71) of a winding member (7), in order to produce a coil (5) for an electrical machine, in particular a rotor and/or stator, particularly preferably an armature or externally grooved stator, wherein the winding module (2) comprises:
a module stand (20);
a needle carriage (24) with a needle (25), wherein the needle carriage (24) is supported in the module stand (20) in a displaceable manner in a first direction (R₁),
**characterized in that**
the winding module (2) further has a winding material clamping device (240) for clamping the winding material (8); wherein the winding material clamping device (240) is configured in order to secure the winding material (8) to prevent torsion about and to prevent displacement along the needle axis (250); and wherein the winding material clamping device (240) is arranged in or on the needle carriage (24).

2. The winding module (2) as claimed in claim 1, wherein the winding material clamping device (240) has a clamping lever (241) which is supported on or in the needle carriage (24) and which is movable, in particular pivotable, between:
a clamping position, in which the winding material (8) is clamped by the clamping lever (241) during correct use of the winding module (2);
a release position, in which the clamping lever (241) releases the winding material (8) during correct use of the winding module (2) for movement relative to the needle (25); and
wherein the clamping lever (241) is preferably a two-armed lever and/or an L-shaped lever.

3. The winding module (2) as claimed in claim 2, wherein the clamping lever (241) is movable via a lever actuator (242), wherein the lever actuator (242) has a movably supported eccentric element (2422);
wherein the clamping lever (241) and/or the eccentric element (2422) is/are preferably pretensioned, in particular in the clamping position, by means of a tensioning device (2428), wherein the tensioning device preferably has a resilient element (2424), in particular a pressure spring and/or tension spring element, preferably a helical spring; and
wherein the lever actuator (242) is preferably actuatable via a hydraulic device, preferably a pneumatic cylinder, for moving the clamping lever (241).

4. The winding module (2) as claimed in one of claims 1 to 3, wherein the needle carriage (24) has a winding material channel (243) which is preferably closed in a radially circumferential manner in order to guide the winding material (8) through the needle carriage (24) to the needle (25);
wherein this winding channel (243) preferably extends centrally through the needle carriage (24).

5. The winding module (2) as claimed in one of claims 1 to 4, wherein the module stand (20) has a guide device (26), wherein the needle carriage (24) is guided on the guide device (26) in the first direction (R₁); and
wherein the guide device (26) preferably has at least one, preferably two, guide rail(s) (261; 262) which is/are opposite with respect to the needle carriage (24) transversely to the first direction (R₁) and which preferably extend(s) in the first direction (R₁).

6. The winding module (2) as claimed in claim 3 or the winding module (2) as claimed in claim 3 and claim 4 and/or claim 5 which further has a torque shaft (2421) in order to rotate the eccentric element (2422); and
wherein the torque shaft (2421) preferably extends parallel with the at least one guide rail (261; 262) and preferably extends substantially over the length of the at least one guide rail (261; 262).

7. A module frame (12) for a plurality of winding modules (2) as claimed in one of claims 1 to 6, comprising at least one winding module (2) according to any one of the preceding claims 1 to 6, wherein the module frame (12) has a plurality of receiving members (120) to releasably fix the plurality of winding modules (2).

8. The module frame (12) as claimed in claim 7, further comprising a single rotation element (121;122;123;124) or at least a pair comprising a first and a second rotation element (121;122;123;124), wherein the first and second rotation elements (121;122;123;124) of the pair are supported in a rotatable manner on or in the module frame (12) with spacing from each other in the first direction (R₁),
wherein the module frame (12) further comprises a coupling device (23);
wherein the coupling device (23) is connected in terms of movement to the single rotation element (121;122;123;124) or connected in terms of movement to at least one rotation element (121;122;123;124) of the at least one pair comprising a first and second rotation element (121;122;123;124), wherein the coupling device (23) is preferably configured in such a manner that it couples the rotational movement of the first and second rotation elements (121;122;123;124) of the pair;
wherein the coupling device (23) is further connected in terms of movement to the needle carriage (24);
so that the needle carriage (24) can be moved in the first direction (R₁) via the rotational movement of the single rotation element (121;122;123;124) or the at least one rotation element (121;122;123;124) of the at least one pair comprising a first and second rotation element (121;122;123;124).

9. The module frame (12) as claimed in claim 8, wherein the first rotation element (121;122) is a first shaft (121) or a first disk (123) which is supported on a first shaft (121) and the second rotation element (122; 123) is a second shaft (122) or a second disk (124) which is supported on a second shaft (122); and
wherein the connection device (23) has a carriage belt (1250) for forming a belt drive with the first and second rotation elements (121;122,123;124); and
wherein the carriage belt (1250) is preferably configured as a toothed belt and the first and second rotation elements (121;122,123;124) of the pair are preferably configured as toothed disks and together form a toothed belt drive.

10. The module frame (12) as claimed in claim 9, wherein the carriage belt (1250) is open; and
wherein first and second belt ends (231, 232) are preferably fixed via clamping plates (212, 222) to the first or second rotation element (121;122;123;124); and
wherein the open carriage belt (1250) preferably extends in the first direction (R₁).

11. The module frame (12) as claimed in claim 9 or claim 10, wherein the carriage belt (1250) is releasably fixed to the needle carriage (24), preferably via a clamping plate (247) which is fitted to the needle carriage (24).

12. The module frame (12) as claimed in one of claims 8 to 10, wherein all the single rotation elements (121;122,123;124) and/or the first and second rotation elements (121;122,123;124) are driven, preferably
via at least a first servo motor (S₁) or
via precisely one single first servo motor (S₁); wherein the single first servo motor (S₁) is preferably connected via a first belt drive (126) to the/the first rotation element(s) (121; 122) and preferably via a second belt drive (127) to the/the second rotation element(s) (123, 124).

13. A winding device (1) for automatically winding, preferably using the needle winding technique, winding material (8), in particular wire in grooves (71) of a winding member (7), in order to produce a coil (5) for an electrical machine, in particular an armature or externally grooved stator, wherein the winding device (1) comprises:
a machine frame (10),
a table plate (11) having at least one switching unit (6) for receiving and switching the winding member (7),
a module frame (12) as claimed in one of claims 8 to 12; and
wherein the at least one winding module (2) is preferably fixed in the module frame (12) in such a manner that the first direction (R₁) is perpendicular to the second direction (R₂).

14. The winding device (1) as claimed in claim 13, wherein the module frame (12) is movable relative to the table plate (11) in a second direction (R₂) and thus all the winding modules (2) which are fixed in the module frame (12) are movable in the second direction (R₂); and
wherein the winding device (1) preferably has at least one, preferably precisely one, single, second servo motor (S₂) for moving the module frame (12) in the second direction (R₂).

15. The winding device (1) as claimed in claim 13 or claim 14, wherein there are provided 2, 3, 4, 5, 6, 7, 8 or more preferably individually removable winding modules (2) in the same module frame (12); and
wherein preferably an even number of 2, 4, 6, 8 or more winding modules (2) are or can be fixed in the module frame (12); and/or
one or more third servo motors (S₃) are provided, wherein with each third servo motor (S₃) at least one, preferably precisely two or more, switching unit(s) (6) can be switched.

16. The winding device (1) as claimed in one of claims 13 to 15, wherein a plurality or all of the winding material clamping devices (240) are coupled to each other, preferably coupled in terms of movement via a push rod (2426), and are actuatable via one, preferably the same, hydraulic device, preferably a hydraulic, in particular pneumatic, cylinder.

17. Use of a winding module (2) as claimed in one of claims 1 to 6, of a module frame (12) as claimed in one of claims 7 to 12 or a winding device (1) as claimed in one of claims 13 to 16, for winding coils (5), in particular of armatures or externally grooved stators, for an electrical machine;
wherein there is preferably used as the winding material (8) wire, in particular wire having a diameter of from 0.5 mm to 2 mm, preferably of more than 1 mm, preferably from 1 mm to 1.5 mm.

## Revendications

1. Module d'enroulement (2) pour un dispositif d'enroulement (1) pour l'enroulement automatique d'un matériau d'enroulement (8), en particulier de fil, dans des rainures (71) d'un corps d'enroulement (7), pour la fabrication d'une bobine (5) pour une machine électrique, en particulier un rotor et/ou stator, en particulier de préférence une armature ou stator rainuré extérieurement, où le module d'enroulement (2) comprend :
un cadre de module (20) ;
un coulisseau d'aiguille (24) avec une aiguille (25), le coulisseau d'aiguille (24) étant monté dans le cadre de module (20) de manière à pouvoir être déplacé dans une première direction (R₁) ;
caractérisé en
en ce que le module d'enroulement (2) présente en outre un dispositif de serrage de matériau d'enroulement (240) pour serrer le matériau d'enroulement (8) ; le dispositif de serrage de matériau d'enroulement (240) étant conçu pour fixer le matériau d'enroulement (8) contre une rotation autour et un déplacement le long de l'axe d'aiguille (250) ; et le dispositif de serrage de matériau d'enroulement (240) étant disposé dans ou sur le chariot d'aiguille (24).

2. Module d'enroulement (2) selon la revendication 1, dans lequel le dispositif de serrage de matériau d'enroulement (240) présente un levier de serrage (241) qui est monté sur ou dans le chariot à aiguilles (24) et qui est mobile, en particulier pivotant, entre celui-ci :
une position de serrage dans laquelle le matériau d'enroulement (8) est serré par le levier de serrage (241) pendant l'utilisation prévue du module d'enroulement (2) ;
une position de déverrouillage dans laquelle le levier de serrage (241) déverrouille le matériau d'enroulement (8) pour le déplacer par rapport à l'aiguille (25) pendant l'utilisation prévue du module d'enroulement (2) ; et
dans lequel le levier de serrage (241) est de préférence un levier à deux bras et/ou un levier en forme de L.

3. Module d'enroulement (2) selon la revendication 2, dans lequel le levier de serrage (241) est mobile par l'intermédiaire d'un actionneur à levier (242), l'actionneur à levier (242) présentant un élément excentrique (2422) monté de manière mobile ;
dans lequel le levier de serrage (241) et/ou l'élément excentrique (2422) est de préférence précontraint, en particulier dans la position de serrage, au moyen d'un dispositif de serrage (2428) ; où le dispositif de serrage comporte de préférence un élément élastique (2424), en particulier un élément élastique de compression et/ou de traction, de préférence un ressort spiral ; et
dans lequel l'actionneur de levier (242) peut de préférence être actionné par un dispositif hydraulique, de préférence un cylindre pneumatique, pour déplacer le levier de serrage (241).

4. Module d'enroulement (2) selon l'une quelconque des revendications 1 à 3, dans lequel le coulisseau d'aiguille (24) présente un canal de matériau d'enroulement (243) de préférence fermé radialement circonférentiellement pour guider le matériau d'enroulement (8) par le coulisseau d'aiguille (24) vers l'aiguille (25) ;
où ce canal d'enroulement (243) s'étend de préférence de manière centrale à travers la glissière à aiguilles (24).

5. Module d'enroulement (2) selon l'une quelconque des revendications 1 à 4, dans lequel le cadre de module (20) comporte un dispositif de guidage (26), où le chariot à aiguilles (24) est guidé sur le dispositif de guidage (26) dans la première direction (R₁) ; et
dans lequel le dispositif de guidage (26) présente de préférence au moins un, de préférence deux, rails de guidage (261 ; 262) qui sont opposés par rapport au chariot à aiguilles (24) transversalement à la première direction (R₁) et s'étendent de préférence dans la première direction (R₁).

6. Module d'enroulement (2) selon la revendication 3 ou module d'enroulement (2) selon la revendication 3 et la revendication 4 et/ou 5, qui comprend en outre un arbre de couple (2421) pour faire tourner l'élément excentrique (2422) ; et
dans lequel l'arbre de couple (2421) s'étend de préférence parallèlement à l'au moins un rail de guidage (261 ; 262) et s'étend de préférence sensiblement sur la longueur du au moins un rail de guidage (261 ; 262).

7. Cadre de module (12) pour une pluralité de modules d'enroulement (2) selon l'une des revendications 1 à 6, comprenant au moins un module d'enroulement (2) selon l'une des revendications 1 à 6, dans lequel le cadre de module (12) comporte une pluralité de logements (120) pour fixer de manière amovible la pluralité de modules d'enroulement (2).

8. Cadre de module (12) selon la revendication 7, comprenant en outre un élément de rotation unique (121 ; 122 ; 123 ; 124) ou au moins une paire d'un premier et d'un deuxième élément de rotation (121 ; 122 ; 123 ; 124), dans lequel les premier et deuxième éléments de rotation (121 ; 122, 123 ; 124) de la paire sont montés de manière rotative sur ou dans le cadre de module (12) suivant la première direction (R₁) à une distance les uns des autres ;
dans lequel ledit cadre de module (12) comprend en outre un dispositif d'accouplement (23) ;
dans lequel le dispositif d'accouplement (23) est couplé en mouvement à l'élément de rotation unique (121 ; 122 ; 123 ; 124) ou est couplé en mouvement à au moins un élément de rotation (121 ; 122 ; 123 ; 124) de l'au moins une paire d'un premier et deuxième élément de rotation (121 ; 122 ; 123 ; 124), le dispositif d'accouplement (23) étant de préférence configuré pour coupler le mouvement rotatif des premier et deuxième éléments de rotation (121 ; 122, 123 ; 124) de la paire ;
dans lequel le dispositif d'accouplement (23) est en outre couplé en mouvement à la glissière à aiguille (24) ;
de sorte que le chariot à aiguilles (24) est mobile par le mouvement de rotation de l'élément rotatif unique (121 ; 122 ; 123 ; 124) ou de l'au moins un élément rotatif (121 ; 122 ; 123 ; 124) de la au moins une paire provenant du premier et deuxième élément de rotation (121 ; 122 ; 123 ; 124), le long de la première direction (R₁).

9. Cadre de module (12) selon la revendication 8, dans lequel ledit premier élément rotatif (121 ; 122) est un premier arbre (121) ou un premier disque (123) supporté sur un premier arbre (121) et ledit deuxième élément rotatif (122 ; 123) est un deuxième arbre (122) ou un deuxième disque (124) supporté sur un deuxième arbre (122) ; et
dans lequel le dispositif d'accouplement (23) comprend une courroie de chariot (1250) pour former un entraînement par courroie avec les premier et deuxième éléments rotatifs (121 ; 122, 123 ; 124) ; et
dans lequel la courroie de chariot (1250) est de préférence conçue comme courroie dentée et les premier et second éléments de rotation (121 ; 122, 123 ; 124) de la paire sont de préférence conçus comme poulies dentées et forment ensemble un entraînement par courroie crantée.

10. Cadre de module (12) selon la revendication 9, dans lequel la ceinture du chariot (1250) est ouverte ; et
dans lequel les première et deuxième extrémités de courroie (231, 232) sont fixées de préférence par l'intermédiaire de plaques de serrage (212, 222) aux premier et deuxième éléments rotatifs (121 ; 122 ; 123 ; 124), respectivement ; et
dans lequel la courroie de chariot ouverte (1250) s'étend de préférence dans la première direction (R₁).

11. Cadre de module (12) selon la revendication 9 ou 10, dans lequel la courroie de chariot (1250) est fixée de manière amovible sur le chariot à aiguilles (24), de préférence par l'intermédiaire d'une plaque de serrage (247) fixée sur le chariot à aiguilles (24).

12. Cadre de module (12) selon l'une des revendications 8 à 10, dans lequel tous les éléments rotatifs unique (121 ; 122, 123 ; 124) et/ou les premier et second éléments rotatifs (121 ; 122, 123 ; 124) sont entraînés, de préférence à chaque fois.
par au moins un premier servomoteur (S₁), ou
par l'intermédiaire d'un exactement un premier servomoteur individuel (S₁), le premier servomoteur individuel (S₁) étant couplé de préférence au(x) premier(s) élément(s) de rotation (121 ; 122) via un premier entraînement à courroie (126) et de préférence au(x) deuxième(s) élément(s) de rotation (123, 124) via un second entraînement à courroie (127).

13. Dispositif d'enroulement (1) pour enrouler automatiquement, de préférence par la technique d'enroulement à aiguille, un matériau d'enroulement (8), en particulier du fil, dans des rainures (71) d'un corps d'enroulement (7) pour produire une bobine (5) pour une machine électrique, en particulier une armature ou un stator à rainures extérieures, le dispositif d'enroulement (1) comprenant :
un bâti de machine (10) ;
un plateau de table (11) avec au moins une unité de commutation (6) pour recevoir et connecter le corps d'enroulement (7) ;
un cadre de module (12) selon l'une des revendications 8 à 12 ; et
le au moins un module d'enroulement (2) étant de préférence fixé dans le cadre de module (12) de telle sorte que la première direction (R₁) soit perpendiculaire à la deuxième direction (R₂).

14. Dispositif d'enroulement (1) selon la revendication 13, dans lequel le cadre de module (12) est mobile par rapport au plateau de table (11) dans une deuxième direction (R₂) et donc tous les modules d'enroulement (2) fixés dans le cadre de module (12) sont mobiles dans la deuxième direction (R₂) ; et
dans lequel le dispositif d'enroulement (1) comprend de préférence au moins un, de préférence exactement un, deuxième servomoteur (S₂) pour déplacer le cadre de module (2) dans la deuxième direction UR₂).

15. Dispositif d'enroulement (1) selon la revendication 13 ou 14, dans lequel 2, 3, 4, 5, 6, 8 ou plus de modules d'enroulement (2) sont fixés ou peuvent être fixés dans le même cadre de module (12) ; et
dans lequel de préférence un nombre pair de 2, 4, 6, 8 ou plus de modules d'enroulement (2) sont prévus dans le cadre de module (12) ; et/ou
dans lequel un ou plusieurs troisièmes servomoteurs (S₃) sont prévus, où au moins un, de préférence exactement deux ou plus, unités de commutation (6) pouvant être commutées avec chaque troisième servomoteur (S3).

16. Dispositif d'enroulement (1) selon l'une des revendications 13 à 15, dans lequel plusieurs ou tous les dispositifs de serrage de matériau d'enroulement (240) sont couplés les uns aux autres, de préférence couplés en mouvement par une tige de poussée (2426), et peuvent être actionnés par un dispositif hydraulique, de préférence le même dispositif, de préférence un cylindre hydraulique, notamment pneumatique.

17. Utilisation d'un module d'enroulement (2) selon l'une quelconque des revendications 1 à 6, d'un cadre de module (12) selon l'une quelconque des revendications 7 à 12 ou d'un dispositif d'enroulement (1) selon l'une quelconque des revendications 13 à 16 pour enrouler des bobines (5), en particulier en particulier un une armature ou stator rainuré extérieurement, pour une machine électrique;
où le matériau d'enroulement (8) utilisé est, de préférence de fil, en particulier du fil avec un diamètre de 0.5 millimètre à 2 millimètres, de préférence de plus que 1 millimètre, de préférence entre 1 millimètre et 1.5 millimètres.
